## Europäisches Patentamt
## European Patent Office
## Office européen des brevets

(19)

(11) Numéro de publication: **0 044 785 B1**

(12) # FASCICULE DE BREVET EUROPEEN

(45) Date de publication du fascicule du brevet:
**15.02.84**

(51) Int. Cl.³: **C 03 B 23/03**, C 03 B 23/023

(21) Numéro de dépôt: **81401144.1**

(22) Date de dépôt: **20.07.81**

(54) **Presse pneumatique pour le bombage de feuilles de verre.**

(30) Priorité: **18.07.80 FR 8015900**

(43) Date de publication de la demande:
**27.01.82 Bulletin 82/4**

(45) Mention de la délivrance du brevet:
**15.02.84 Bulletin 84/7**

(84) Etats contractants désignés:
**BE DE GB IT LU NL SE**

(56) Documents cités:
**FR - A - 1 218 545**

(73) Titulaire: **SAINT-GOBAIN VITRAGE, Les Miroirs 18, avenue d'Alsace, F-92400 Courbevoie (FR)**
(84) Etats contractants désignés: **BE GB IT LU NL SE**

(73) Titulaire: **VEGLA Vereinigte Glaswerke GmbH, Viktoria Allee 3-5, D-5100 Aachen (DE)**
(84) Etats contractants désignés: **DE**

(72) Inventeur: **Ehre, Hubert, Schütz von Rode Strasse 31, D-5120 Herzogenrath (DE)**
Inventeur: **Gass, Robert, Klosterstrasse 49, D-5132 Übach-Palenberg (DE)**
Inventeur: **Kriesinger, Alf, Auf der Kloos 27, D-5190 Stolberg (DE)**
Inventeur: **Rissman, Heinz Bernd, Vereinsstrasse 5-7, D-5100 Aachen (DE)**

(74) Mandataire: **Eudes, Marcel et al, Saint-Gobain Recherche 39 Quai Lucien Lefranc, F-93304 Aubervilliers Cedex (FR)**

ACTORUM AG

## Presse pneumatique pour le bombage de feuilles de verre

L'invention a pour objet une presse de bombage vertical de feuilles de verre, munie de deux formes montées en principe chacune sur un chariot mû par un vérin pneumatique à double action et ainsi rendues mobiles l'une par rapport à l'autre.

Sur les presses de ce type connu (voir FR-A-1 218 545), les deux chambres de ces vérins sont habituellement alimentées en air comprimé par des électrovannes qui reviennent en position de mise à l'air libre lorsque leur alimentation électrique est coupé volontairement ou accidentellement. Cette mise à l'air libre des deux chambres de chaque vérin n'empêche pas forcément que son piston continue à se déplacer d'une façon incontrôlable après la coupure du courant et que, par exemple, les formes continuent à se rapprocher. La cause en est que, selon la position effective des pistons lors de la coupure d'alimentation, il existe dans ces deux chambres des volumes d'air différents, de sorte que, même si l'on prévoit des sections d'échappement égales, la pression ne baisse pas à la même vitesse dans chacune d'elles. Il peut en résulter entre les deux faces du piston une importante différence de pression, laquelle provoque les mouvements incontrôlables précités.

Le phénomène est encore plus marqué lorsqu'il existe sur l'une des faces du piston de chacun des vérins un étranglement destiné à freiner le déplacement du piston car cet étranglement ralentit encore la chute de pression sur la face correspondante.

Ces mouvements incontrôlables et imprévisibles des outils de presse peuvent gêner considérablement le travail autour de la presse. En outre, ils peuvent créer un grave danger pour le personnel de service ou de surveillance car ils se produisent même lors des arrêts d'urgence déclenchés par action de contacteurs de sécurité d'urgence montés sur l'installation.

L'invention a pour objet de proposer une presse de bombage pneumatique du type précité, construite de telle sorte que, lors d'une coupure d'alimentation, en cas d'incident électrique ou encore si l'on agit sur les arrêts d'urgence, les outils de presse s'arrêtent instantanément, sans aucun mouvement incontrôlable et imprévisible, dans la position qu'ils occupaient.

Selon l'invention, les conduites d'alimentation en air comprimé conduisant aux chambres situées sur les deux faces du piston de chaque vérin sont reliées entre elles par une canalisation d'équilibrage fermée par une électrovanne, cette électrovanne s'ouvrant sous l'action de son ressort en cas de coupure du courant pour permettre l'équilibrage des pressions.

La disposition prévue par l'invention empêche que ne se crée de part et d'autre du piston, dans un tel cas, une différence de pression, dont l'existence à l'instant de la coupure provoquerait alors un déplacement. Elle permet au contraire d'équilibrer instantanément les pressions sur les deux faces de ce piston de sorte que lui-même ne se trouve pas bloqué dans la position qu'il occupait et que les outils de presse restent flottants, aucune force ne s'exerçant pour empêcher de les déplacer par intervention extérieure. La presse de bombage présente donc en cas d'accident la meilleure sécurité possible.

Dans le cas où, sur l'un des côtés du vérin moteur, une presse de bombage conforme à l'invention est munie d'un frein hydraulique à retour pneumatique connue en soi par le brevet français FR-A-1 218 545 destiné à ralentir le déplacement du piston, l'invention prévoit en outre de placer sur l'alimentation pneumatique de ce frein une électrovanne ouverte dans les conditions de travail, de sorte que la coupure volontaire ou accidentelle du courant ferme cette alimentation et met le frein à l'air libre. Cette mesure auxiliaire fait instantanément tomber la pression à l'intérieur du frein, évitant que celui-ci ne renvoie le chariot de presse en arrière. D'autres avantages du nouveau dispositif selon l'invention apparaîtront dans la description suivante d'un exemple avantageux décrit en référence aux dessins. Ces derniers montrent:

– figure 1: de façon schématique, l'ensemble d'une installation de bombage avec presse;

– figure 2: un détail extrait en II de la figure 1;

– figure 3: le montage effectif d'un circuit pneumatique.

Les formes de bombage 1, pour conférer à la feuille de verre 2 la forme désirée, doivent se déplacer l'une vers l'autre en direction des flèches F1 et F2. Dans ce but, elles sont montées sur des chariots à glissière 3. Chacun de ces chariots est porteur d'une oreille 4 sur laquelles s'articule la tige 5 du piston 6 d'un vérin pneumatique à double action 7 destiné à déplacer le chariot 3. D'un côté, chaque vérin 7 est relié par une canalisation 8 et une vanne 9 à la canalisation d'air comprimé 10; de l'autre côté, il est relié à cette dernière par une canalisation 11 et une vanne 12. La vanne 9 permet d'alimenter la presse pour provoquer l'avance de la forme de bombage, pendant que la vanne 12 met la face avant du piston à l'air libre et, réciproquement, l'inversion des positions des vannes permet le recul de l'outil.

Sur le chariot 3 est monté un taquet 15. Peu avant que la forme 1 n'atteigne la feuille de verre 2, ce taquet rencontre l'extrémité de la tige 16 d'un vérin hydraulique 17. Il provoque ainsi le déplacement du piston 18 qui chasse l'huile de ce vérin à travers la canalisation 19 et la valve 20 vers un réservoir 21. Dans le réservoir 21, l'espace placé au dessus de la surface libre de l'huile est raccordé par une canalisation de mise sous pression 22, une vanne 23 et un détendeur 24 à la conduite d'alimentation en air comprimé 25.

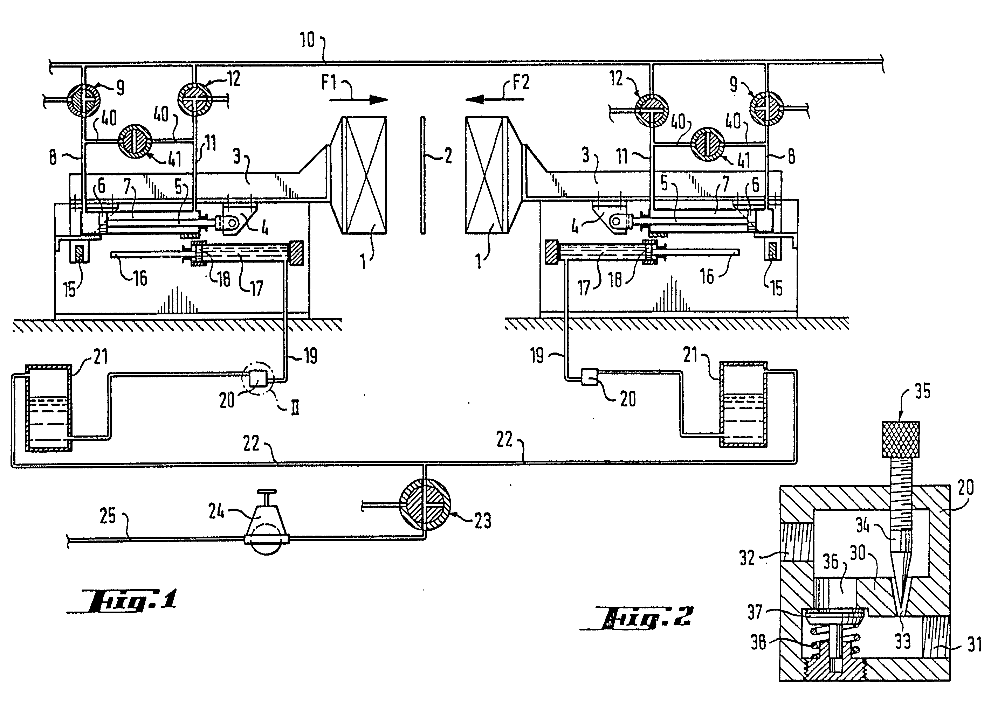

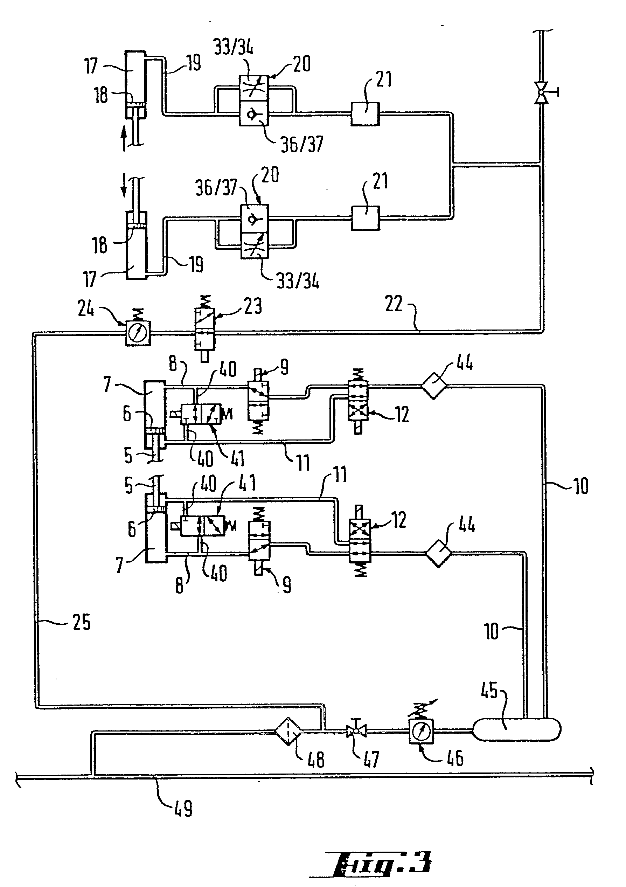

Le frein constitué par le vérin hydraulique 17, avec son piston 18 et la valve 20 montée sur le réservoir 21 ralentit le mouvement de la forme de bombage dans la dernière partie de son avance. La valve 20, représentée en détail sur la figure 2, sert à régler ce freinage. Elle comprend un corps creux séparé en deux parties par une cloison 30. Son ouverture 31 est raccordée à la canalisation 19 qui conduit au vérin 17 alors que son ouverture 32 est raccordée à celle qui rejoint le réservoir 21. La cloison 30 porte un orifice> 33 à siège conique, obturé de façon réglable par un pointeau 34 placé à l'extrémité d'une vis munie d'un bouton moleté 35. La cloison 30 porte un second orifice 36, sur lequel repose un clapet 37 appliqué par un ressort 38. A la fin du pressage, l'huile du cylindre 17 est refoulée de l'ouverture 31 vers l'ouverture 32 à travers l'orifice 33 du pointeau, tandis que l'orifice 36 est fermé par le clapet 37; lors du mouvement arrière des formes de pressage, l'air comprimé refoule l'huile dans le réservoir 21, à travers l'orifice 36 et contre l'action du ressort 38.

Entre les canalisations 8 et 11 qui conduisent à chacune des chambres de chaque vérin moteur 7 et au voisinage immédiat de celui-ci est montée une canalisation d'équilibrage 40, normalement fermée par une électrovanne à simple action 41. Aussitôt que cette vanne cesse d'être alimentée, c'est-à-dire en cas de panne de courant ou si l'on agit sur les contacteurs de sécurité d'urgence, elle s'ouvre sous l'action de son ressort, ce qui met immédiatement en communication, par l'intermédiaire de la canalisation 40, les deux faces du piston du vérin.

La vanne 23 qui est placée en tête de la canalisation 22, en amont des réservoirs 21, est, elle aussi, une électrovanne qui, en cas de coupure de courant, se place immédiatement, par l'action de son ressort, dans la position qui coupe le raccordement à la conduite d'alimentation 25 et met à l'air libre la canalisation 22 de mise sous pression du réservoir 21.

Dans la variante de schéma pneumatique montrée figure 3, la vanne 9 est alimentée par l'intermédiaire de la vanne 12. Cette dernière est une vanne inverseuse qui possède ainsi la priorité sur la vanne 9. Comme précédemment, cette variante est représentée dans la position qui correspond à la phase au cours de laquelle les pistons 6 des vérins 7 provoquent l'avance des outils de presse l'un vers l'autre. L'extrémité du vérin qui se trouve sous pression est raccordée par la canalisation 8 à la vanne 9 qui est une électrovanne à trois voies à simple action. L'autre extrémité du vérin, ainsi que l'entrée de la vanne 9 se trouvent raccordées aux deux sorties de la vanne 12 qui est une vanne à quatre voies à simple action alimentée par la canalisation 10, à travers un graisseur à brouillard d'huile 44, depuis un réservoir d'air comprimé 45 lui-même relié par l'intermédiaire du régulateur de pression 46, d'une vanne de barrage 47 et d'un filtre à air comprimé 48 à une conduite d'alimentation en air comprimé 49.

Les électrovannes 9 et 12 sont commandées par un circuit électrique non représenté.

L'électrovanne 41, disposée sur la canalisation d'équilibrage 40 est une vanne à trois voies qui se trouve en position fermée aussi longtemps que la machine est en marche et ceci indépendamment de la phase de travail de la presse.

A la conduite d'alimentation en air comprimé 49, derrière le filtre 48, se trouve également raccordée la canalisation 25 qui alimente les réservoirs 21 par l'intermédiaire du détendeur 24, de l'électrovanne 23 et de la canalisation 22. L'électrovanne 23 est montée de façon à mettre la canalisation 22 à l'air libre aussitôt que le courant est coupé pour empêcher que l'air comprimé contenu dans les réservoirs 21 ne refoule l'huile de façon indésirable à travers l'orifice 36 du clapet de retour lorsque la presse, non alimentée, se trouve libre elle-même.

**Revendications**

1. Presse de bombage vertical de feuilles de verre munie de deux formes (1) montées chacune sur un chariot (3) mû par un vérin pneumatique à double action (7), caractérisée en ce que les conduites (8, 11), qui alimentent sous pression les deux chambres du piston de chaque vérin sont reliées entre elles par une canalisation d'équilibrage (40) fermée par une électrovanne (41), cette électrovanne s'ouvrant automatiquement en cas de coupure du courant pour permettre l'équilibrage des pressions.

2. Presse selon la revendication 1, munie sur l'un des côtés du vérin (7), d'un frein hydraulique (17, 20) à retour pneumatique, caractérisée en ce qu'une électrovanne (23), ouverte dans les conditions de travail, est placée sur la conduite d'alimentation pneumatique (22) de ce frein, la coupure du courant fermant cette alimentation et mettant le frein à l'air libre.

**Patentansprüche**

1. Biegepresse für das vertikale Biegen von Glasscheiben mit zwei jeweils auf einem Schlitten (3) angeordneten Biegeformen (1), wobei jeder Schlitten (3) von einem doppeltwirkenden pneumatischen Zylinder (7) betätigt wird, dadurch gekennzeichnet, dass die zu den beiden Kolbenseiten jedes Zylinders (7) führenden Druckleitungen (8, 11) durch eine Druckausgleichsleitung (40) miteinander verbunden sind, die durch ein Magnetventil (41) abgesperrt ist, das sich bei Abschaltung des Stromes zum Zweck des Druckausgleichs automatisch öffnet.

2. Biegepresse nach Anspruch 1, bei der auf der einen Seite des Zylinders (7) eine hydraulische Dämpfungseinrichtung (17, 20) mit pneumatischer Rückstellung angeordnet ist, dadurch gekennzeichnet, dass ein im Arbeitszustand geöffnetes Magnetventil (23) in der pneumatischen Druckleitung (22) dieser Dämpfungseinrichtung angeordnet ist, das bei Abschaltung des Stromes die Druckluftzufuhr unterbricht und die Dämpfungseinrichtung ins Freie entlüftet.

**Claims**

1. A press for curving of glass sheets in the vertical position provided with two dies (1) both of which are mounted on a carriage (3) displaceable by a double acting pneumatic actuator (7), characterised in that the ducts (8, 11) which feed under pressure the two chambres of the piston of each actuator are connected to each other by a

**0 044 785**

balancing duct (40) closed by an electrically operated valve (41), this valve opening automatically in the case of cessation of current to allow balancing of the pressures.

2. A press according to claim 1, provided on one of the sides of the actuator (7) with a hydraulic brake (17, 20) having pneumatic return, characterised in that an electrically operated valve (23), open under working conditions, is situated on the duct for pneumatic feed (22) of the brake, cessation of current closing off this feed and connecting the brake to the atmosphere.

Fig.1

Fig.2

**Fig.3**